# EUROPÄISCHE PATENTSCHRIFT

(11) **EP 4 370 403 B1**
(45) Veröffentlichungstag und Bekanntmachung des Hinweises auf die Patenterteilung: **06.08.2025**
(21) Anmeldenummer: 22735296.0
(22) Anmeldetag: 08.06.2022
(51) Int. Cl.: B62D 5/04, B62D 5/00

(54) **VERFAHREN ZUR ÜBERPRÜFUNG EINES STEER-BY-WIRE LENKSYSTEMS, LENKSYSTEM UND FAHRZEUG**
METHOD FOR CHECKING A STEER-BY-WIRE STEERING SYSTEM, STEERING SYSTEM, AND VEHICLE
PROCÉDÉ DE VÉRIFICATION D'UN SYSTÈME DE DIRECTION À DIRECTION ASSISTÉE, SYSTÈME DE DIRECTION ET VÉHICULE

(30) Priorität: 15.07.2021 DE 102021118346
(43) Veröffentlichungstag der Anmeldung: 22.05.2024
(73) Patentinhaber: Schaeffler Technologies AG & Co. KG, 91074 Herzogenaurach (DE)
(72) Erfinder: PATHAN, Habeeb Khan, 91058 Erlangen (DE)
(86) Internationale Anmeldenummer: PCT/DE2022/100428
(87) Internationale Veröffentlichungsnummer: WO 2023/284908

(56) Entgegenhaltungen:
- DE-A1- 102015 122 253
- DE-A1- 102018 211 764
- DE-A1- 102019 111 415

## Beschreibung

Die Erfindung betrifft ein Verfahren zur Überprüfung eines Steer-by-Wire Lenksystems und ein Steer-by-Wire Lenksystem, wobei das Lenksystem eine mit Fahrzeugrädern verbundene Lenkvorrichtung, ein Lenkrad, einen Stellmotor und eine Kontrolleinheit aufweist, wobei der Stellmotor dazu konfiguriert ist, über eine mechanische Kopplung ein Drehmoment auf das Lenkrad auszuüben und die Kontrolleinheit dazu konfiguriert ist, durch eine Regelung des Stellmotors einen Lenkradwinkel des Lenkrads in Übereinstimmung mit einem Lenkwinkel der Lenkvorrichtung zu bringen.

Bei Steer-by-Wire Systemen wird der durch das Bedienelement (Lenkrad) erzeugte Lenkbefehl auf elektronischem Wege an die Lenkvorrichtung übertragen und dort mittels eines Aktuators in eine Lenkbewegung der Räder umgesetzt. Im Gegensatz zu rein manuellen oder elektromechanisch bzw. hydraulisch unterstützten Lenksystemen ergibt sich dabei durch die vollständige mechanische Entkopplung zwischen Lenkrad und Lenkvorrichtung eine Reihe von technischen Herausforderungen. Bei Systemen, in denen das Drehmoment für die Lenkbewegung der Räder vollständig oder teilweise über das Lenkrad ausgeübt wird, liefert die Lenkhaptik dem Fahrer wichtige Rückmeldungen über das Fahrzeugverhalten und den Kontakt zwischen den Rädern und der Fahrbahn. Darüber hinaus zeigt die Stellung des Lenkrads dem Fahrer die Ausrichtung der Räder an, was insbesondere beim Starten des Fahrzeugs eine wichtige Orientierungshilfe bietet. Bei Steer-by-Wire Systemen muss das haptische Feedback aufgrund des fehlenden direkten mechanischen Durchgriffs auf die Räder künstlich durch einen mit dem Lenkrad verbundenen Aktuator erzeugt werden und die Übereinstimmung zwischen der Lenkradstellung und der Radstellung durch einen zusätzlichen Abgleichmechanismus hergestellt werden. Für diese Funktionen weisen solche Systeme in der Regel einen Stellmotor auf, der durch Ausübung eines Drehmoments auf das Lenkrad das fehlende mechanische Feedback simuliert bzw. das Lenkrad in die gewünschte Sollposition bringt. Steer-by-Wire Systeme mit Lenkradaktuatoren sind beispielsweise aus den Druckschriften DE 198 34 868 A1, DE 103 21 825 B4 und DE 10 2014 211 815 A1 bekannt. Das vom Stellmotor erzeugte Drehmoment wird dabei in der Regel über eine mechanische Kopplung, beispielsweise in Form eines Schneckengetriebes, auf die Lenkradwelle übertragen. Bei derartigen Anordnungen ergibt sich jedoch das technische Problem, dass die mechanische Kopplung zwischen dem Stellmotor und dem Lenkrad während des Betriebs mechanischer Abnutzung und Verschleiß unterliegt, so dass sich die Positionier- und Übertragungsgenauigkeit, das mechanische Spiel und das Reibungsverhalten im Laufe der Zeit verändern können. Hierdurch kann sowohl das haptische Feedback, als auch die Regelung der Sollposition beeinträchtigt werden. Dokument DE 10 2019 111415 A1 offenbart ein Verfahren gemäß dem Oberbegriff des Anspruchs 1.

Vor diesem Hintergrund stellt sich die Aufgabe, ein Verfahren und ein Lenksystem zur Verfügung zu stellen, mit dem sich der Zustand der mechanischen Kopplung zwischen Stellmotor und Lenkrad überprüfen lässt, so dass Verschleiß- und Abnutzungserscheinungen frühzeitig erkannt und gegebenenfalls kompensiert werden können.

Die Aufgabe wird gelöst durch ein Verfahren zur Überprüfung eines Steer-by-Wire Lenksystems, wobei das Lenksystem eine mit Fahrzeugrädern verbundene Lenkvorrichtung, ein Lenkrad, einen Stellmotor und eine Kontrolleinheit aufweist, wobei der Stellmotor dazu konfiguriert ist, über eine mechanische Kopplung ein Drehmoment auf das Lenkrad auszuüben und die Kontrolleinheit dazu konfiguriert ist, durch eine Regelung des Stellmotors einen Lenkradwinkel des Lenkrads in Übereinstimmung mit einem Lenkwinkel der Lenkvorrichtung zu bringen,
wobei das Verfahren die folgenden Schritte aufweist:
-- in einem Regelungsschritt wird der Stellmotor des Lenkrads derart geregelt, dass der Lenkradwinkel in Übereinstimmung mit einem Sollwinkel gebracht wird, wobei ein zeitlicher Verlauf einer Zustandsgröße des Lenkrads und/oder des Stellmotors ermittelt wird;
-- in einem Analyseschritt wird ein Frequenzspektrum des zeitlichen Verlaufs der Zustandsgröße ermittelt und eine Amplitude einer vorgegebenen Spektralkomponente des Frequenzspektrums bestimmt;
-- in einem Klassifizierungsschritt wird eine Klassifizierung eines Zustandes der mechanischen Kopplung in Abhängigkeit von der Amplitude der Spektralkomponente durchgeführt.

Das erfindungsgemäße Verfahren beruht auf der, durch eine eingehenden Analyse des Regelungsverhaltens von Steer-by-Wire Systemen gewonnenen, Erkenntnis, dass sich eine Veränderung der mechanischen Kopplung zwischen Stellmotor und Lenkrad in charakteristischen Oszillationen des zeitlichen Verhaltens des Regelungsprozesses für die Lenkradstellung äußert, so dass das Auftreten solcher Oszillationen als Indikator für den Zustand der mechanischen Kopplung genutzt werden kann.

Während des normalen Betriebs des Lenksystems besteht die Funktion der Kontrolleinheit darin, sicherzustellen, dass die Stellung des Lenkrads - der Lenkradwinkel - die Ausrichtung der Lenkvorrichtung - den Lenkwinkel - korrekt wiedergibt. Dazu werden sowohl der Lenkradwinkel, als auch der Lenkwinkel durch Sensoren erfasst und eine eventuelle Abweichung durch die Regelung des Stellmotors ausgeglichen. Insbesondere kann dieser Abgleich erfolgen, bevor das Fahrzeug in Bewegung gesetzt wird, beispielsweise beim Starten des Fahrzeugs. Die Bestimmung der Lenkradstellung kann insbesondere durch einen Drehwinkelsensor erfolgen, der beispielsweise an der Lenkradwelle angeordnet sein kann. Der Lenkwinkel kann ebenfalls durch einen Drehwinkelsensor erfolgen, der insbesondere die Stellung der Räder oder die Stellung einer Komponente des Lenkgetriebes, beispielsweise eines Lenkritzels, detektiert. Bei dem Stellmotor für die Aktuierung des Lenkrads kann es sich beispielsweise um einen Permanentmagnet-Synchronmotor (oder eine andere Form von Wechselstrommotor) oder um einen bürstenlosen oder gebürsteten Gleichstrommotor handeln, der das Lenkrad bzw. die Lenkradwelle über die mechanische Kopplung mit einem durch die Kontrolleinheit geregelten Stellmoment beaufschlagt.

Dieser Regelungsmechanismus, der zunächst dazu dient, den Lenkradwinkel in Übereinstimmung mit dem Lenkwinkel zu bringen, wird bei dem erfindungsgemäßen Verfahren folgendermaßen zur Überprüfung der mechanischen Kopplung zwischen Stellmotor und Lenkrad eingesetzt: Zunächst wird im Regelungsschritt ein Sollwinkel für das Lenkrad vorgegeben und der Stellmotor durch die Kontrolleinheit so geregelt, dass das Lenkrad in die Sollstellung gebracht wird. Dabei kann der Sollwinkel insbesondere der zu diesem Zeitpunkt eingestellte Lenkwinkel der Lenkvorrichtung sein. Es ist jedoch auch möglich, einen Sollwinkel vorzugeben, der nicht dem Lenkwinkel entspricht und der ausschließlich der Überprüfung des Systems dient. Der Sollwinkel kann beispielsweise so gewählt sein, dass er sich vom aktuellen Lenkradwinkel um eine vorgegebene Differenz unterscheidet, die anschließend von der Kontrolleinheit zu Null geregelt wird. Denkbar ist auch, das Lenkrad zunächst durch den Stellmotor um einen vorbestimmten Winkel gegenüber dem Lenkwinkel zu verdrehen und die Differenz anschließend durch die Regelung auszugleichen. Es ist auch möglich, den Regelungsprozess mehrfach durchzuführen und dazu nacheinander mehrere voneinander verschiedene Sollwinkel einzustellen. Während der Regelung des Lenkradwinkels wird der zeitliche Verlauf einer Zustandsgröße ermittelt und insbesondere in einem Speicherelement der Kontrolleinheit abgespeichert. Die Zustandsgröße kann beispielsweise eine Stellung oder Kenngröße des Lenkrads oder des Stellmotors sein und bildet die Dynamik des Regelungsprozesses ab, so dass der zeitliche Verlauf der Regelung einer nachfolgenden Analyse zugänglich wird. Insbesondere kann der zeitliche Verlauf über ein vorgegebenes Zeitintervall hinweg ermittelt werden oder über den gesamten Regelungs-Zeitraum hinweg, bis der Lenkradwinkel in Übereinstimmung mit dem Sollwinkel gebracht ist. Im Analyseschritt wird anschließend das Frequenzspektrum des zeitlichen Verlaufs der Zustandsgröße ermittelt und eine Amplitude einer vorgegebenen Spektralkomponente des Frequenzspektrums bestimmt. Bei der Spektralkomponente kann es sich beispielsweise um eine vorgegebene Frequenz oder eine Mehrzahl vorgegebener Frequenzen, insbesondere um ein oder mehrere Frequenzintervalle, handeln. Denkbar ist auch, dass innerhalb eines vorgegebenen Frequenzintervalls ein Maximum des Frequenzspektrums identifiziert und die Amplitude des Maximums bestimmt wird. Die Frequenz, bei der die charakteristischen Fluktuationen der Regelung auftreten und die dementsprechend für den Analyseschritt vorgegeben wird, hängt von der mechanischen Kopplung und dem verwendeten Regelungsmechanismus ab und kann beispielsweise in einem Frequenzintervall von 10 Hz bis 300 Hz, 30 Hz bis 200 Hz oder 50 Hz bis 100 Hz liegen (je nach Lage der charakteristischen Frequenzen der Komponenten wie beispielsweise der Eigenfrequenz der mechanischen Komponente). Die Amplitude ist insbesondere eine komplexe Amplitude der Spektralkomponente, wobei für die weitere Auswertung der Amplitude vorzugsweise ein Betrag oder Betragsquadrat, bzw. im Falle mehrerer Frequenzen eine Summe oder ein Integral von Beträgen oder Betragsquadraten gebildet wird. Ausgehend von der auf diese Weise bestimmten Amplitude kann dann im Klassifizierungsschritt anhand eines vorgegebenen Kriteriums oder einer Mehrzahl von Kriterien eine Bewertung der mechanischen Kopplung zwischen Stellmotor und Lenkrad erfolgen. Im einfachsten Fall kann beispielsweise überprüft werden, ob die ermittelte Amplitude oder eine aus der Amplitude abgeleitete Kenngröße innerhalb eines Toleranzintervalls oder unterhalb einer vorgegebenen Schranke liegt. Das Kriterium für die Klassifizierung kann sich insbesondere an empirisch gewonnenen Daten orientieren, beispielsweise an einem Vergleich von Spektren, die anhand von mechanischen Kopplungen mit unterschiedlich starkem Verschleiß- und Abnutzungsgrad ermittelt wurden. Das Kriterium kann auch auf einer theoretischen oder rechnergestützten Modellierung der mechanischen Kopplung und ihrem Reibungsverhalten basieren. Ergibt sich aus der Überprüfung, dass das Kriterium nicht erfüllt ist, dass also beispielsweise die betrachtete Kenngröße außerhalb des Toleranzintervalls liegt, kann auf Basis der durch die Amplitude quantifizierten Stärke der Oszillationen auf einen erhöhten Abnutzungsgrad geschlossen werden. Auf diese Weise lässt sich durch eine relativ einfache Auswertung des Systemverhaltens der Zustand der mechanischen Kopplung überprüfen, so dass eine mechanische Degradierung frühzeitig erkannt und entsprechende Maßnahmen ergriffen werden können. Insbesondere werden die Schritte des Verfahrens automatisiert durchgeführt, wenn sich das Fahrzeug im Stillstand befindet, beispielsweise in der Anfangsphase nach dem Starten des Fahrzeugs oder nachdem das Fahrzeug geparkt wurde. Denkbar ist auch, das Überprüfungsverfahren automatisiert in regelmäßigen Zeitabständen zu wiederholen und das System auf diese Weise über einen längeren Betriebszeitraum hinweg auf Verschleiß hin zu überwachen. Der Abnutzungs- und/oder Verschleißgrad kann dabei insbesondere über eine Benutzerschnittstelle (Human Machine Interface, HMI), beispielsweise am Armaturenbrett des Fahrzeugs angezeigt werden.

Gemäß einer vorteilhaften Ausgestaltung des erfindungsgemäßen Verfahrens erfolgt in einem, auf den Klassifizierungsschritt folgenden Anpassungsschritt eine Anpassung eines Regelungsparameters für die Regelung des Stellmotors in Abhängigkeit von der Amplitude der Spektralkomponente. Ebenso kann eine Anpassung mehrerer Regelungsparameter erfolgen. Insbesondere kann es sich bei dem Regelungsparameter oder den Regelungsparametern um einen Verstärkungsfaktor und/oder eine Zeitkonstante der Regelung handeln. Vorzugsweise wird die Anpassung in Abhängigkeit eines vorgegebenen Zusammenhangs zwischen der Amplitude der Spektralkomponente und dem Wert des Regelungsparameters durchgeführt, insbesondere derart, dass der angepasste Wert des Regelungsparameters zu einer Reduzierung oder vollständigen Unterdrückung der Regelungsoszillationen führt. Beispielsweise kann ein solcher Zusammenhang auf empirisch gewonnenen Daten oder einem mathematischen oder rechnergestützten Modell basieren und für verschiedene Werte der Amplitude jeweils einen zugehörigen Wert des Regelungsparameters angeben, der die Oszillationen maximal reduziert oder vollständig beseitigt. Vorzugsweise ist der Zusammenhang zwischen der Amplitude und dem Wert des Regelungsparameters in einem Speicher der Kontrolleinheit abgelegt und wird im Anpassungsschritt von der Kontrolleinheit aus dem Speicher ausgelesen. Bei dem Zusammenhang kann es sich um einen funktionalen Zusammenhang oder um einen Datensatz, z.B. in Form einer Tabelle handeln. Denkbar ist auch, dass die Anpassung in Abhängigkeit von Amplituden mehrerer Spektralkomponenten erfolgt, beispielsweise indem bei der Anpassung zwischen mehreren Frequenzbereichen unterschieden wird und beim Auftreten von Oszillationen sowohl die Amplitude, als auch der Frequenzbereich der Oszillation in die Anpassung eingeht. Auf diese Weise werden die detektierten Auffälligkeiten im Frequenzspektrum nicht nur zur Klassifizierung des Zustands der mechanischen Kopplung verwendet, sondern gleichzeitig zu einer spezifischen, auf die Stärke der Oszillationen zugeschnittene Anpassung der Regelung eingesetzt und der Regelmechanismus dadurch stabilisiert.

Gemäß einer vorteilhaften Ausgestaltung des erfindungsgemäßen Verfahrens wird in einem, auf den Klassifizierungsschritt folgenden Anzeigeschritt ein Ergebnis der Klassifizierung, insbesondere ein Degradierungsgrad der mechanischen Kopplung, angezeigt. Im einfachsten Fall kann beispielsweise eine Warnung ausgegeben werden, dass eine Auffälligkeit detektiert wurde, die eine weitere Überprüfung des Systems erfordert.

Insbesondere kann die Klassifizierung in Abhängigkeit eines vorgegebenen Zusammenhangs zwischen Amplitude und Degradierungsgrad erfolgen. Beispielsweise kann ein solcher Zusammenhang auf empirisch gewonnenen Daten oder einem mathematischen oder rechnergestützten Modell basieren und für verschiedene Werte der Amplitude jeweils einen zugehörigen Degradierungsgrad angeben. Vorzugsweise ist der Zusammenhang zwischen der Amplitude und dem Degradierungsgrad in einem Speicher der Kontrolleinheit abgelegt und wird im Klassifizierungsschritt oder im Anzeigeschritt von der Kontrolleinheit aus dem Speicher ausgelesen. Insbesondere kann das Verfahren so gestaltet werden, dass sowohl eine Anpassung des Regelungsparameters, als auch eine Anzeige des Ergebnisses der Klassifizierung erfolgt. Denkbar ist auch, dass beim Auftreten von Oszillationen zunächst eine oder mehrere Anpassungen des Regelungsparameters erfolgen, ab einem gewissen Degradierungsgrad jedoch eine Warnung ausgegeben wird, dass eine weitere Überprüfung, Reparatur oder ein Austausch der mechanischen Kopplung erforderlich ist.

Gemäß einer vorteilhaften Ausgestaltung ist die Zustandsgröße ein Drehmoment oder Drehwinkel des Lenkrads oder ein Drehmoment oder Drehwinkel des Stellmotors. Insbesondere wird die Zustandsgröße durch einen Drehmomentsensor bzw. einen Winkelsensor gemessen. Beispielsweise kann das Lenksystem zu diesem Zweck einen, an der Lenkradwelle angeordneten Winkelsensor und/oder einen Drehmomentsensor aufweisen. Ebenso können am Stellmotor ein Winkelsensor (Rotorlagegeber) und/oder ein Drehmomentsensor angeordnet sein, der die Stellung des Rotors bzw. das vom Stellmotor erzeugte Drehmoment misst. Denkbar sind auch Kombinationen bei denen Ausgangssignale mehrerer Sensoren in den Analyseschritt eingehen, d.h. für die Analyse wird der zeitliche Verlauf des Drehmoments des Lenkrads und/oder des Drehwinkel des Lenkrads und/oder des Drehmoments des Stellmotors und/oder des Drehwinkel des Stellmotors ermittelt und die zugehörigen Frequenzspektren bestimmt.

Gemäß einer vorteilhaften Ausgestaltung des erfindungsgemäßen Verfahrens ist die mechanische Kopplung ein Untersetzungsgetriebe, insbesondere ein Schneckengetriebe.

Vorzugsweise wird das Frequenzspektrum mittels einer diskreten Fourier-Transformation, insbesondere einer schnellen Fourier-Transformation ermittelt.

Gemäß einer vorteilhaften Ausgestaltung ist vorgesehen, dass die Regelung des Stellmotors in Abhängigkeit von einer Differenz zwischen Lenkradwinkel und Sollwinkel erfolgt, wobei die Regelung insbesondere zusätzlich in Abhängigkeit von einer zeitlichen Änderungsrate des Lenkradwinkels erfolgt. Die Kontrolleinheit ist bei dieser Ausführungsform Teil eines Regelkreises, bei dem zunächst die Regeldifferenz aus Sollwert, insbesondere Sollwinkel, und Istwert, insbesondere dem aktuellen Lenkradwinkel, gebildet wird und die Regelung des Stellmoments des Stellmotors in Abhängigkeit von der mit einem Verstärkungsfaktor verstärkten Regeldifferenz erfolgt. Insbesondere kann der Regelkreis zusätzlich ein nichtlineares Regelkreisglied aufweisen, das die verstärkte Regeldifferenz auf einen Wert zwischen einer vorgegebenen unteren und oberen Schranke begrenzt. Vorzugsweise wird mit der verstärkten Regeldifferenz oder der begrenzten verstärkten Regeldifferenz eine weitere Regeldifferenz mit der aktuellen Winkelgeschwindigkeit des Lenkrads gebildet. Die Winkelgeschwindigkeit kann insbesondere durch Differentiation aus dem zeitlichen Verlauf des Lenkradwinkels gewonnen werden. Die weitere Regeldifferenz kann danach durch einen zweiten Verstärkungsfaktor verstärkt werden und insbesondere durch ein weiteres nichtlineares Regelkreisglied auf einen Wert zwischen zwei Schranken begrenzt werden. Die Regelung des Stellmoments des Stellmotors erfolgt entsprechend in Abhängigkeit von der verstärkten weiteren Regeldifferenz bzw. der begrenzten verstärkten weiteren Regeldifferenz.

Gemäß einer vorteilhaften Ausgestaltung ist vorgesehen, dass der Regelungsparameter ein erster Verstärkungsfaktor ist, der die Differenz zwischen Lenkradwinkel und Sollwinkel verstärkt, wobei im Anpassungsschritt insbesondere zusätzlich eine Anpassung eines zweiten Verstärkungsfaktors für die Regelung in Abhängigkeit von der zeitlichen Änderungsrate des Lenkradwinkels erfolgt. Für die Anpassung des zweiten Verstärkungsfaktors ergeben sich insbesondere die oben zum Anpassungsschritt beschriebenen Gestaltungsmöglichkeiten analog.

Ein weiterer Gegenstand der Erfindung ist ein Steer-by-Wire Lenksystems, aufweisend eine mit Fahrzeugrädern verbundene Lenkvorrichtung, ein Lenkrad, einen Stellmotor und eine Kontrolleinheit, wobei der Stellmotor dazu konfiguriert ist, über eine mechanische Kopplung ein Drehmoment auf das Lenkrad auszuüben und die Kontrolleinheit dazu konfiguriert ist, den Stellmotor derart zu regeln, dass ein Lenkradwinkel des Lenkrads in Übereinstimmung mit einem Lenkwinkel der Lenkvorrichtung gebracht wird, wobei die Kontrolleinheit dazu konfiguriert ist
-- in einem Regelungsschritt den Stellmotor des Lenkrads derart zu regeln, dass der Lenkradwinkel in Übereinstimmung mit einem Sollwinkel gebracht wird, wobei die Kontrolleinheit dazu konfiguriert ist einen zeitlichen Verlauf einer Zustandsgröße des Lenkrads und/oder des Stellmotors zu ermitteln;
-- in einem Analyseschritt ein Frequenzspektrum des zeitlichen Verlaufs der Zustandsgröße zu ermitteln und eine Amplitude einer vorgegebenen Spektralkomponente des Frequenzspektrums zu bestimmen;
-- in einem Klassifizierungsschritt eine Klassifizierung eines Zustandes der mechanischen Kopplung in Abhängigkeit von der Amplitude der Spektralkomponente durchzuführen.

Insbesondere ist das erfindungsgemäße Lenksystem damit dazu konfiguriert, das erfindungsgemäße Verfahren durchzuführen. Alle in Bezug auf das Verfahren beschriebenen Ausgestaltungen und Vorteile übertragen sich analog auf das erfindungsgemäße Lenksystem. Die in den vorteilhaften Ausgestaltungen des Verfahrens durchgeführten Schritte, wie der Anpassungsschritt, der Anzeigeschritt und/oder die Durchführung der Fouriertransformation werden dabei vorzugsweise von der Kontrolleinheit durchgeführt.

Ein weiterer Gegenstand der Erfindung ist ein Fahrzeug aufweisend eine Ausführungsform des erfindungsgemäßen Steer-by-Wire Lenksystems.

Weitere Einzelheiten und Vorteile der Erfindung sollen nachfolgend anhand des in den Zeichnungen dargestellten Ausführungsbeispiels erläutert werden. Hierin zeigt:
- Fig. 1: ein Steer-by-Wire System zur Illustration des erfindungsgemäßen Verfahrens;
- Fig. 2: einen Regelkreis zur Regelung des Lenkradwinkels;
- Fig. 3: das zeitliche Verhalten der Regelung bei einer Veränderung des Regelungsparameters, und
- Fig. 4: die Anpassung des Regelungsparameters.

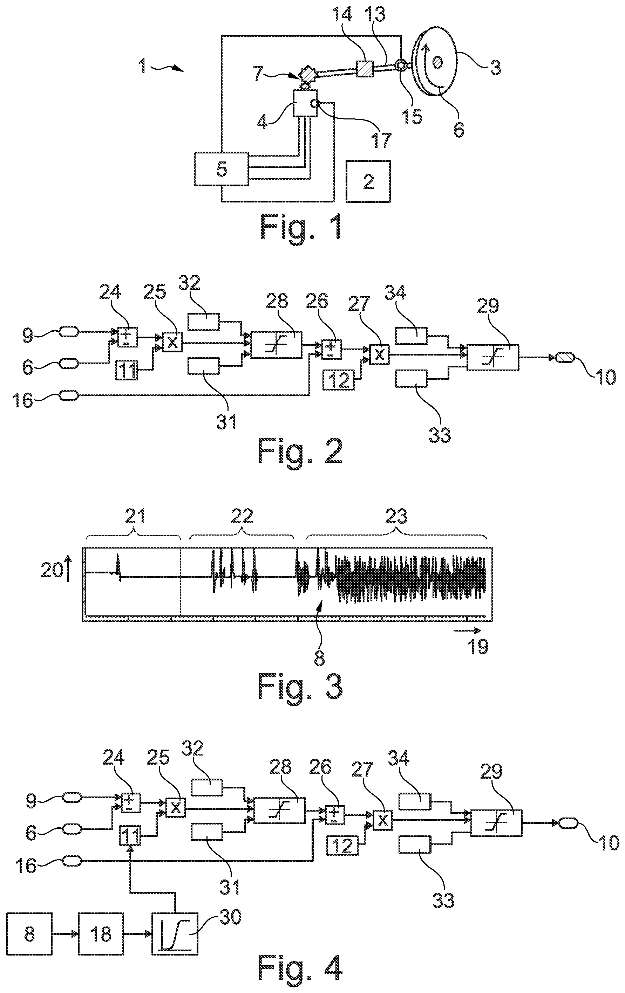

In Fig. 1 ist der schematische Aufbau eines Steer-by-Wire Lenksystems 1 abgebildet, anhand dessen im Folgenden das erfindungsgemäße Konzept erläutert wird. Die beiden Hauptkomponenten des Lenksystems 1 ist zum einen die Bedienungseinheit in Form des Lenkrads 3 und zum anderen die vom Lenkrad kontrollierte Lenkvorrichtung 2, welche mittels eines Aktuators das Lenkmoment erzeugt und auf die Räder des Fahrzeugs überträgt. Der Kerngedanke beim Steer-by-Wire Ansatz besteht darin, den mit dem Lenkrad erzeugten Lenkbefehl auf rein elektronischem Wege an die Lenkvorrichtung 2 zu übertragen, so dass jegliche mechanische Kopplung zwischen Lenkrad 3 und Lenkvorrichtung 2 vollständig entfällt. Zu diesem Zweck ist an der Lenkradwelle 13 ein Multiturn-Winkelsensor 14 angeordnet, der die durch das Lenkrad 3 bewirkte Drehung der Welle 13 detektiert und den gemessenen Lenkradwinkel 6 an die Lenkvorrichtung 2 weitergibt.

Um eine realistische Haptik (z.B. einen entsprechenden Lenkwiderstand) zu erzeugen und um die Stellung des Lenkrads 3 gezielt zu beeinflussen, weist die Lenksäule einen Stellmotor 4, beispielsweise einen Permanentmagnet-Synchronmotor oder einen bürstenlosen Gleichstrommotor auf, der die Lenkradwelle 13 mit einem Drehmoment beaufschlagen kann. Der Motor 4 überträgt das von ihm erzeugte Drehmoment dabei über eine mechanische Kopplung 7, die üblicherweise durch ein Schneckengetriebe realisiert wird. Dieser Mechanismus wird neben der Erzeugung des haptischen Feedbacks dazu benutzt, den Lenkradwinkel 6 mit dem Lenkwinkel der Lenkvorrichtung 2 abzugleichen. Dazu wird der Stellmotor 4 über die Kontrolleinheit 5 derart geregelt, dass das vom Stellmotor 4 erzeugte Drehmoment das Lenkrad 3 in die gewünschte Stellung bringt. Im dargestellten Fall weist das System dazu einen weiteren Winkelsensor 15 auf, der die Stellung der Lenkradwelle 13 and die Kontrolleinheit 5 weitergibt. Zusätzlich erfasst ein weiterer Sensor 17 die Stellung des Rotors des Stellmotors 4 und gibt diese ebenfalls an die Kontrolleinheit weiter. Auf Grundlage dieser Sensordaten wird dann der Stellmotor 4 durch die Kontrolleinheit 5 so geregelt, dass das Lenkrad 3 in die Sollposition gebracht wird.

Mit den abgebildeten Hardware-Komponenten kann durch eine entsprechende Konfiguration der Kontrolleinheit 5 das erfindungsgemäße Verfahren implementiert werden. Dabei werden, wie nachstehend beschrieben, die Oszillationen des Regelungsverhaltens analysiert und auf den Zustand der mechanischen Kopplung 7 zurückgeschlossen.

In Fig. 2 ist eine mögliche Realisierung des Regelkreises dargestellt, mit dem der Lenkradwinkel 6 in Übereinstimmung mit dem Lenkwinkel dem Sollwinkel 9 gebracht wird. Neben dem Sollwinkel 9 basiert die Regelung auf dem durch den Sensor 15 erfassten aktuellen Lenkradwinkel 6 und die durch zeitliche Differentiation des Lenkradwinkels 6 gebildete Winkelgeschwindigkeit 16. Aus dem Sollwert 9 und dem Istwert 6 wird durch das Regelkreisglied 24 zunächst die Differenz gebildet, die anschließend durch das Glied 25 mit dem Verstärkungsfaktor 11 multipliziert wird. Daran anschließend wird das verstärkte Signal durch ein nichtlineares Regelkreisglied 28 auf einen Wert zwischen der unteren und der oberen Schranke 31, 32 begrenzt. Das Ausgangssignal des Glieds 28 geht danach in eine weitere Differenzbildung 26 mit der Winkelgeschwindigkeit 16 ein, die wiederum eine Verstärkung 27 mit dem Faktor 12 erfährt und anschließend durch das Element 29 begrenzt wird (mit den Grenzen 33 und 34). Mit dem Ausgangssignal wird schließlich der Stellmotor 5 betrieben, der das Stellmoment 10 für das Lenkrad 3 erzeugt und durch die mechanische Kopplung 7 auf die Lenkradwelle 13 überträgt.

Die Verstärkungsfaktoren 11 und 12 sind bei diesem Regelkreis so gewählt, dass das geregelte Stellmoment 10 das Lenkrad rasch und in stabiler Weise in die Sollposition bringt. Die Effizienz und Stabilität dieses Mechanismus hängt jedoch vom Zustand der mechanischen Kopplung 7 ab, die während des Betriebs unvermeidbaren mechanischen Belastungen und dem damit verbundenen mechanischen Verschleiß ausgesetzt ist. Durch die Veränderungen, die im Laufe der Zeit im Spiel und im Reibungsverhalten der Kopplung 7 entstehen, wird das auf die Lenkradwelle 13 übertragene Drehmoment beeinflusst und damit nicht nur der dargestellte Regelmechanismus beeinträchtigt, sondern auch die Teile des Systems, die durch den Stellmotor 4 die Lenkhaptik simulieren. Bei dem erfindungsgemäßen Verfahren wird der Einfluss der Kopplung 7 auf den Regelungsprozess dazu genutzt, auf den Zustand der Kopplung 7 und deren eventuelle Verschleißerscheinungen zurückzuschließen. Zusätzlich können die auf diese Weise gewonnenen Informationen dazu genutzt werden, die negativen Auswirkungen auf die Regelung zu kompensieren.

In Fig. 3 ist dazu der Verlauf 8 einer Zustandsgröße 20 des Regelkreises aus Fig. 2 als Funktion der Zeit 19 abgebildet, der sich für verschiedene Werte des Verstärkungsfaktors 11 ergibt. Im abgebildeten Fall handelt es sich bei der Zustandsgröße 20 um das vom Stellmotor 4 erzeugte Drehmoment 10. Bei dem untersuchten Lenksystem 1 weist die mechanische Kopplung 7 zwischen Stellmotor 4 und Lenkrad 3 aufgrund von Verschleiß und Abnutzung ein verändertes Reibungsverhalten auf, so dass auch die Übertragung des Drehmoments 10 auf die Welle 13 gegenüber dem ursprünglichen Zustand verändert ist. Bei der dargestellte Zeitreihe wird der Verstärkungsfaktor 11 für die Regeldifferenz aus Lenkradwinkel 6 und Sollwinkel 16 sukzessive auf den Wert erhöht, bei dem sich im verschleißfreien Zustand der Kopplung 7 ein optimales Regelungsverhalten ergeben würde. Im ersten Zeitintervall 21 beträgt der Verstärkungsfaktor 11 etwa 50 Prozent des ursprünglichen Werts, im zweiten Intervall 22 etwa 80 Prozent und im dritten Zeitintervall 100 Prozent des ursprünglichen Werts. Wie in Fig. 3 deutlich zu sehen ist, bildet sich im dritten Zeitabschnitt 23 eine Instabilität des Regelverhaltens, die sich in Oszillationen des Stellmoments 10 äußert. Wie sich durch Analyse des Regelungsverhaltens herausgestellt hat, entstehen diese Oszillationen in einem charakteristischen Frequenzbereich, der im dargestellten Fall zwischen 50 und 100 Hz liegt. Diese charakteristische Signatur lässt sich über eine Spektralanalyse detektieren und wie nachfolgend beschrieben zur Unterdrückung der Oszillationen einsetzen.

In Fig. 4 ist eine modifizierte Variante des Regelkreises aus Fig. 2 dargestellt, die einen zusätzlichen Mechanismus zur Verbesserung des Regelungsverhaltens aufweist. Neben den in **Fig. 2** dargestellten Komponenten des Regelkreises wird hier durch die Kontrolleinheit 5 der zeitliche Verlauf einer Zustandsgröße 20 des Lenkrads 3 und/oder des Stellmotors 4 (vgl. **Fig. 3****)** einer schnellen Fouriertransformation 18 unterzogen und die Amplitude einer Spektralkomponente ermittelt, die der charakteristischen Frequenz der Oszillationen aus **Fig. 3** entspricht. Dieser Amplitude wird anschließend durch die Auswertung 30 ein optimaler Wert für den Verstärkungsfaktor 11 zugeordnet. Der Verstärkungsfaktor 11 des Regelkreises wird entsprechend angepasst (beispielsweise auf 80 oder 50 Prozent des ursprünglichen Wertes; vgl. **Fig. 3****),** so dass die Oszillationen im Regelungsverhalten effektiv unterdrückt werden.

Das vorstehend beschriebene Verfahren ist eine Ausführungsform des erfindungsgemäßen Verfahrens zur Überprüfung eines Steer-by-Wire Lenksystems 1, wobei das Lenksystem 1 eine mit Fahrzeugrädern verbundene Lenkvorrichtung 2, ein Lenkrad 3, einen Stellmotor 4 und eine Kontrolleinheit 5 aufweist, wobei der Stellmotor 4 dazu konfiguriert ist, über eine mechanische Kopplung 7 ein Drehmoment 10 auf das Lenkrad 3 auszuüben und die Kontrolleinheit 5 dazu konfiguriert ist, durch eine Regelung des Stellmotors 4 einen Lenkradwinkel 6 des Lenkrads 3 in Übereinstimmung mit einem Lenkwinkel der Lenkvorrichtung 2 zu bringen, wobei das Verfahren die folgenden Schritte aufweist:
-- in einem Regelungsschritt wird der Stellmotor 4 des Lenkrads 3 derart geregelt, dass der Lenkradwinkel 6 in Übereinstimmung mit einem Sollwinkel 9 gebracht wird, wobei ein zeitlicher Verlauf 8 einer Zustandsgröße 20 des Lenkrads 3 und/oder des Stellmotors 4 ermittelt wird;
-- in einem Analyseschritt wird ein Frequenzspektrum 18 des zeitlichen Verlaufs 8 der Zustandsgröße 20 ermittelt und eine Amplitude einer vorgegebenen Spektralkomponente des Frequenzspektrums 18 bestimmt;
-- in einem Klassifizierungsschritt wird eine Klassifizierung eines Zustandes der mechanischen Kopplung 7 in Abhängigkeit von der Amplitude der Spektralkomponente durchgeführt.

### Bezugszeichenliste

- 1: Lenksystem
- 2: Lenkvorrichtung
- 3: Lenkrad
- 4: Stellmotor
- 5: Kontrolleinheit
- 6: Lenkradwinkel
- 7: Kopplung zwischen Lenkrad und Stellmotor
- 8: zeitlicher Verlauf der Zustandsgröße
- 9: Sollwinkel
- 10: Stellmoment
- 11: erster Verstärkungsfaktor
- 12: zweiter Verstärkungsfaktor
- 13: Lenkradwelle
- 14: Multiturn-Winkelsensor
- 15: Winkelsensor
- 16: Winkelgeschwindigkeit des Lenkrads
- 17: Rotorlagegeber
- 18: Frequenzspektrum
- 19: Zeit
- 20: Zustandsgröße
- 21: Verlauf bei erstem Wert des Regelungsparameters
- 22: Verlauf bei zweitem Wert des Regelungsparameters
- 23: Verlauf bei dritten Wert des Regelungsparameters
- 24: erste Regeldifferenz
- 25: Verstärkung der ersten Regeldifferenz
- 26: zweite Regeldifferenz
- 27: Verstärkung der zweiten Regeldifferenz
- 28: erstes Begrenzungsglied
- 29: zweites Begrenzungsglied
- 30: Zusammenhang zwischen Amplitude und Anpassung der Verstärkung
- 31: untere Grenze des ersten Begrenzungsglieds
- 32: obere Grenze des ersten Begrenzungsglieds
- 33: untere Grenze des zweiten Begrenzungsglieds
- 34: obere Grenze des zweiten Begrenzungsglieds

## Patentansprüche

1. Verfahren zur Überprüfung eines Steer-by-Wire Lenksystems (1), wobei das Lenksystem (1) eine mit Fahrzeugrädern verbundene Lenkvorrichtung (2), ein Lenkrad (3), einen Stellmotor (4) und eine Kontrolleinheit (5) aufweist, wobei der Stellmotor (4) dazu konfiguriert ist, über eine mechanische Kopplung (7) ein Drehmoment (10) auf das Lenkrad (3) auszuüben und die Kontrolleinheit (5) dazu konfiguriert ist, durch eine Regelung des Stellmotors (4) einen Lenkradwinkel (6) des Lenkrads (3) in Übereinstimmung mit einem Lenkwinkel der Lenkvorrichtung (2) zu bringen,
**dadurch gekennzeichnet, dass** das Verfahren die folgenden Schritte aufweist:
-- in einem Regelungsschritt wird der Stellmotor (4) des Lenkrads (3) derart geregelt, dass der Lenkradwinkel (6) in Übereinstimmung mit einem Sollwinkel (9) gebracht wird, wobei ein zeitlicher Verlauf (8) einer Zustandsgröße (20) des Lenkrads (3) und/oder des Stellmotors (4) ermittelt wird;
-- in einem Analyseschritt wird ein Frequenzspektrum (18) des zeitlichen Verlaufs (8) der Zustandsgröße (20) ermittelt und eine Amplitude einer vorgegebenen Spektralkomponente des Frequenzspektrums (18) bestimmt;
-- in einem Klassifizierungsschritt wird eine Klassifizierung eines Zustandes der mechanischen Kopplung (7) in Abhängigkeit von der Amplitude der Spektralkomponente durchgeführt.

2. Verfahren nach Anspruch 1, **dadurch gekennzeichnet, dass** in einem, auf den Klassifizierungsschritt folgenden Anpassungsschritt eine Anpassung eines Regelungsparameters (11, 12) für die Regelung des Stellmotors (4) in Abhängigkeit von der Amplitude der Spektralkomponente erfolgt.

3. Verfahren nach Anspruch 1 oder 2, **dadurch gekennzeichnet dass** in einem, auf den Klassifizierungsschritt folgenden Anzeigeschritt ein Ergebnis der Klassifizierung, insbesondere ein Degradierungsgrad der mechanischen Kopplung (7), angezeigt wird.

4. Verfahren nach einem der vorhergehenden Ansprüche, **dadurch gekennzeichnet, dass** die Zustandsgröße (20) ein Drehmoment oder Drehwinkel (6) des Lenkrads (3) oder ein Drehmoment oder Drehwinkel des Stellmotors (4) ist.

5. Verfahren nach einem der vorhergehenden Ansprüche, **dadurch gekennzeichnet, dass** die mechanische Kopplung (7) ein Untersetzungsgetriebe, insbesondere ein Schneckengetriebe ist.

6. Verfahren nach einem der vorhergehenden Ansprüche, **dadurch gekennzeichnet, dass** das Frequenzspektrum mittels einer diskreten Fourier-Transformation, insbesondere einer schnellen Fourier-Transformation (18) ermittelt wird.

7. Verfahren nach einem der vorhergehenden Ansprüche, **dadurch gekennzeichnet, dass** die Regelung des Stellmotors (4) in Abhängigkeit von einer Differenz zwischen Lenkradwinkel (6) und Sollwinkel (9) erfolgt, wobei die Regelung insbesondere zusätzlich in Abhängigkeit von einer zeitlichen Änderungsrate (16) des Lenkradwinkels (6) erfolgt.

8. Verfahren nach den Ansprüchen 2 und 7, **dadurch gekennzeichnet, dass** der Regelungsparameter ein erster Verstärkungsfaktor (11) ist, der die Differenz zwischen Lenkradwinkel (6) und Sollwinkel (9) verstärkt, wobei im Anpassungsschritt insbesondere zusätzlich eine Anpassung eines zweiten Verstärkungsfaktors (12) für die Regelung in Abhängigkeit von der zeitlichen Änderungsrate (16) des Lenkradwinkels (6) erfolgt.

9. Steer-by-Wire Lenksystem (1) aufweisend eine mit Fahrzeugrädern verbundene Lenkvorrichtung (2), ein Lenkrad (3), einen Stellmotor (4) und eine Kontrolleinheit (5), wobei der Stellmotor (4) dazu konfiguriert ist, über eine mechanische Kopplung (7) ein Drehmoment (10) auf das Lenkrad (3) auszuüben und die Kontrolleinheit (5) dazu konfiguriert ist, durch eine Regelung des Stellmotors (4) einen Lenkradwinkel (6) des Lenkrads (3) in Übereinstimmung mit einem Lenkwinkel der Lenkvorrichtung (2) zu bringen,
**dadurch gekennzeichnet, dass** die Kontrolleinheit (5) dazu konfiguriert ist
-- in einem Regelungsschritt den Stellmotor (4) des Lenkrads (3) derart zu regeln, dass der Lenkradwinkel (6) in Übereinstimmung mit einem Sollwinkel (9) gebracht wird, wobei die Kontrolleinheit (5) dazu konfiguriert ist einen zeitlichen Verlauf (8) einer Zustandsgröße (20) des Lenkrads (3) und/oder des Stellmotors (4) zu ermitteln;
-- in einem Analyseschritt ein Frequenzspektrum (18) des zeitlichen Verlaufs (8) der Zustandsgröße (20) zu ermitteln und eine Amplitude einer vorgegebenen Spektralkomponente des Frequenzspektrums (18) zu bestimmen;
-- in einem Klassifizierungsschritt eine Klassifizierung eines Zustandes der mechanischen Kopplung (7) in Abhängigkeit von der Amplitude der Spektralkomponente durchzuführen.

10. Fahrzeug aufweisend ein Steer-by-Wire Lenksystem (1) nach Anspruch 9.

## Claims

1. Method for checking a steer-by-wire steering system (1), wherein the steering system (1) comprises a steering device (2) connected to vehicle wheels, a steering wheel (3), a servomotor (4) and a control unit (5), wherein the servomotor (4) is configured to exert a torque (10) on the steering wheel (3) via a mechanical coupling (7), and the control unit (5) being configured to bring a steering wheel angle (6) of the steering wheel (3) into conformity with a steering angle of the steering device (2) by means of controlling the servomotor (4), **characterised in that** the method comprises the following steps:
- in a control step, controlling the servomotor (4) of the steering wheel (3) such that the steering wheel angle (6) is brought into conformity with a target angle (9), wherein determining a time characteristic (8) of a state variable (20) of the steering wheel (3) and/or of the servomotor (4);
- in an analysing step, determining a frequency spectrum (18) of the time characteristic (8) of the state variable (20) and determining an amplitude of a predetermined spectral component of the frequency spectrum (18);
- in a classification step, performing a classification of a state of the mechanical coupling (7) as a function of the amplitude of the spectral component.

2. Method according to claim 1, **characterised in that**, in an adaptation step following the classification step, adapting a control parameter (11, 12) for controlling the servomotor (4) takes place as a function of the amplitude of the spectral component.

3. Method according to claim 1 or 2, **characterised in that** displaying a result of the classification, in particular a degree of degradation of the mechanical coupling (7), in a display step following the classification step.

4. Method according to one of the preceding claims, **characterised in that** the state variable (20) is a torque or angle of rotation (6) of the steering wheel (3) or a torque or angle of rotation of the servomotor (4).

5. Method according to one of the preceding claims, **characterised in that** the mechanical coupling (7) is a reduction gear, in particular a worm gear.

6. Method according to one of the preceding claims, **characterised in that** determining the frequency spectrum by means of a discrete Fourier transform, in particular a fast Fourier transform (18).

7. Method according to one of the preceding claims, **characterised in that** controlling the servomotor (4) as a function of a difference between the steering wheel angle (6) and the target angle (9), wherein the control is additionally carried out in particular as a function of a rate of change (16) of the steering wheel angle (6) over time.

8. Method according to claims 2 and 7, **characterised in that** the control parameter is a first amplification factor (11) which amplifies the difference between the steering wheel angle (6) and the target angle (9), wherein, in particular, adapting a second amplification factor (12) for controlling in the adaptation step as a function of the rate of change (16) of the steering wheel angle (6) over time.

9. Steer-by-wire steering system (1) comprising a steering device (2) connected to vehicle wheels, a steering wheel (3), a servomotor (4) and a control unit (5), wherein the servomotor (4) is configured to exert a torque (10) on the steering wheel (3) via a mechanical coupling (7) and the control unit (5) is configured to bring a steering wheel angle (6) of the steering wheel (3) into agreement with a steering angle of the steering device (2) by means of controlling the servomotor (4), **characterised in that** the control unit (5) is configured to
- in a control step, regulate the servomotor (4) of the steering wheel (3) in such a way that the steering wheel angle (6) is brought into conformity with a setpoint angle (9), wherein the control unit (5) is configured to determine a time characteristic (8) of a state variable (20) of the steering wheel (3) and/or of the servomotor (4);
- in an analysis step, determine a frequency spectrum (18) of the time characteristic (8) of the state variable (20) and determine an amplitude of a predetermined spectral component of the frequency spectrum (18);
- in a classification step, perform a classification of a state of the mechanical coupling (7) as a function of the amplitude of the spectral component.

10. A vehicle comprising a steer-by-wire steering system (1) according to claim 9.

## Revendications

1. Procédé de vérification d'un système de direction Steer-by-Wire (1), dans lequel le système de direction (1) comprend un dispositif de direction (2) relié aux roues du véhicule, un volant de direction (3), un servomoteur (4) et une unité de contrôle (5), le servomoteur (4) étant configuré pour appliquer un couple (10) au volant (3) par l'intermédiaire d'un couplage mécanique (7) et l'unité de commande (5) étant configurée pour amener un angle de volant (6) du volant (3) en conformité avec un angle de braquage du dispositif de direction (2) par une régulation du servomoteur (4), **caractérisé en ce que** le procédé comprend les étapes suivantes :
- dans une étape de régulation, réguler le servomoteur (4) du volant de direction (3) de telle sorte que l'angle de volant (6) soit amené en concordance avec un angle de consigne (9), en déterminant une évolution temporelle (8) d'une grandeur d'état (20) du volant de direction (3) et/ou du servomoteur (4) ;
- dans une étape d'analyse, déterminer un spectre de fréquences (18) de l'évolution temporelle (8) de la grandeur d'état (20) et déterminer une amplitude d'une composante spectrale prédéfinie du spectre de fréquences (18) ;
- dans une étape de classification, effectuer une classification d'un état du couplage mécanique (7) en fonction de l'amplitude de la composante spectrale.

2. Procédé selon la revendication 1, **caractérisé en ce que**, dans une étape d'adaptation suivant l'étape de classification, une adaptation d'un paramètre de régulation (11, 12) pour la régulation du servomoteur (4) est effectuée en fonction de l'amplitude de la composante spectrale.

3. Procédé selon la revendication 1 ou 2, **caractérisé en ce que**, dans une étape d'affichage suivant l'étape de classification, un résultat de la classification, en particulier un degré de dégradation du couplage mécanique (7), est affiché.

4. Procédé selon l'une des revendications précédentes, **caractérisé en ce que** la grandeur d'état (20) est un couple ou un angle de rotation (6) du volant (3) ou un couple ou un angle de rotation du servomoteur (4).

5. Procédé selon l'une quelconque des revendications précédentes, **caractérisé en ce que** le couplage mécanique (7) est un réducteur de vitesse, en particulier un réducteur à vis sans fin.

6. Procédé selon l'une des revendications précédentes, **caractérisé en ce que** le spectre de fréquences est déterminé au moyen d'une transformée de Fourier discrète, en particulier une transformée de Fourier rapide (18).

7. Procédé selon l'une des revendications précédentes, **caractérisé en ce que** la régulation du servomoteur (4) s'effectue en fonction d'une différence entre l'angle du volant de direction (6) et l'angle de consigne (9), la régulation s'effectuant en particulier en outre en fonction d'un taux de variation (16) dans le temps de l'angle du volant de direction (6).

8. Procédé selon les revendications 2 et 7, **caractérisé en ce que** le paramètre de régulation est un premier facteur d'amplification (11) qui amplifie la différence entre l'angle du volant de direction (6) et l'angle de consigne (9), dans lequel, dans l'étape d'adaptation, on procède en particulier en outre à une adaptation d'un deuxième facteur d'amplification (12) pour la régulation en fonction du taux de variation (16) dans le temps de l'angle du volant de direction (6).

9. Système de direction Steer-by-Wire (1) comprenant un dispositif de direction (2) relié aux roues du véhicule, un volant de direction (3), un servomoteur (4) et une unité de commande (5), le servomoteur (4) étant configuré pour appliquer un couple (10) au volant de direction (3) par l'intermédiaire d'un couplage mécanique (7) et l'unité de commande (5) étant configurée pour amener un angle de volant (6) du volant (3) en conformité avec un angle de braquage du dispositif de direction (2) par une régulation du servomoteur (4), **caractérisé en ce que** l'unité de commande (5) est configurée pour
- dans une étape de régulation, régler le servomoteur (4) du volant de direction (3) de telle sorte que l'angle de volant de direction (6) soit amené en correspondance avec un angle de consigne (9), l'unité de contrôle (5) étant configurée pour déterminer une courbe temporelle (8) d'une grandeur d'état (20) du volant de direction (3) et/ou du servomoteur (4) ;
- dans une étape d'analyse, déterminer un spectre de fréquences (18) de l'évolution temporelle (8) de la grandeur d'état (20) et déterminer une amplitude d'une composante spectrale prédéterminée du spectre de fréquences (18) ;
- dans une étape de classification, effectuer une classification d'un état du couplage mécanique (7) en fonction de l'amplitude de la composante spectrale.

10. Véhicule comprenant un système de direction Steer-by-Wire (1) selon la revendication 9.
